Europäisches Patentamt

**European Patent Office** (11) Numéro de publication: **0 002 154**

Office européen des brevets **A1**

(12) **DEMANDE DE BREVET EUROPEEN**

(21) Numéro de dépôt: **78400176.0** (51) Int. Cl.²: **C 08 J 3/28,** C 08 L 21/00
(22) Date de dépôt: **13.11.78** **// (C08L21/00, 75/04)**

---

(30) Priorité: **17.11.77 FR 7734608**

(43) Date de publication de la demande: **30.05.79**
**Bulletin 79/11**

(84) Etats contractants désignés: **BE DE GB NL SE**

(71) Demandeur: **Société Anonyme dite : COMPAGNIE FRANCAISE DE RAFFINAGE, 5, rue Michel-Angé, F-75781 Paris Cedex 16 (FR)**

(72) Inventeur: **Bouteville, Frédéric, 142, boulevard Albert 1er, F-76000 Le Havre (FR)**
Inventeur: **Reguerre, Réné, 1, rue Frédéric Sauvage, F-76600 Le Havre (FR)**
Inventeur: **Benard, Etienne, 13 rue Marcel Nouet, F-76620 Le Havre (FR)**
Inventeur: **Soubigou, Guy, 19, rue du Bocage de Bléville, F-76620 Le Havre (FR)**

(74) Mandataire: **Brot, Philippe, CABINET BROT 83, rue d'Amsterdam, F-75008 Paris (FR)**

---

㊄ **Mélanges d'élastomères, leur vulcanisation en champ d'ultra-haute fréquence, les mélanges vulcanisés et leurs applications sous forme de profilés.**

㊄ L'invention concerne un procédé de vulcanisation d'élastomères ou de mélanges d'élastomères normalement apolaires, par passage desdits élastomères dans un champ d'ultra-haute fréquence.

Selon l'invention, préalablement audit passage, on incorpore dans le mélange à vulcaniser, en plus des constituants classiques des caoutchoucs, ou moins un polyuréthane et un plastifiant.

Ce procédé s'applique à la vulcanisation d'élastomères contenant des charges claires.

EP 0 002 154 A1

ACTORUM AG

0002154

TITRE MODIFIÉ
voir page de garde


- 1 -

**Procédé perfectionné de vulcanisation d'élastomères, notamment d'élastomères contenant des charges claires.**


L'invention concerne un procédé de vulcanisation d'élastomères ou de mélanges d'élastomères normalement apolaires, par passage desdits élastomères dans un champ d'ultra-haute fréquence. L'invention concerne également les mélanges caoutchouteux destinés à être vulcanisés par ce procédé et les mélanges caoutchouteux vulcanisés par ce procédé. L'invention concerne enfin une application particulière des mélanges caoutchouteux vulcanisés par ledit procédé.

Les techniques anciennes de vulcanisation des élastomères, par voie thermique, ont progressivement été remplacées par des techniques nouvelles, car cette vulcanisation thermique ne permettait pas d'avoir des cadences de production importantes, en raison de la conductibilité thermique défavorable des mélanges de caoutchoucs, notamment dans le cas de profilés de forte épaisseur. Les techniques nouvelles - passage des profilés ou des articles finis dans un tunnel à micro-ondes - ont permis d'augmenter les cadences, dans la mesure où les mélanges de caoutchoucs constituant lesdits produits finis sont polaires. Certains élastomères bruts sont déjà polaires et ne posent donc aucun problème pour être vulcanisés par ces techniques ; c'est en particulier le cas des caoutchoucs de chloroprène, ou des caoutchoucs nitriles. Ces caoutchoucs sont suffisamment polaires pour que l'élévation de température qu'ils subissent, lors de leur passage dans un tunnel à micro-ondes, à travers un champ électrique à ultra-haute fréquence, soit suffisante pour provoquer une bonne vulcanisation. Par contre, d'autres caoutchoucs, tels que les caoutchoucs butyl, les terpolymères d'éthylène propylène (EPDM), le caoutchouc naturel, le copolymère butadiène styrène, ne sont pas, eux, suffisamment polaires pour provoquer une absorption d'énergie, donc une élévation de température suffisante pour réaliser une bonne vulcanisation. Un certain nombre de techniques ont été mises au point pour pallier la non-polarité de ces derniers caoutchoucs : ainsi, on a proposé l'addition de substances polaires, par exemple l'addition de caoutchouc de chloroprène dans du caoutchouc naturel ou dans du copolymère styrène butadiène, ou l'addition d'autres substances à caractère polaire, ferrite de baryum ou paraffine chlorée (ces deux derniers additifs ne permettant pas cependant d'obtenir des échauffements suffisamment rapides pour les cadences industrielles).

L'addition de noir de carbone à des caoutchoucs apolaires permet également d'augmenter suffisamment la polarité desdits caoutchoucs pour procéder à une vulcanisation applicable industriellement ; cependant, la quantité de noir de carbone à incorporer aux caoutchoucs bruts ou aux mélanges de caoutchoucs doit être savamment choisie, de façon à obtenir un échauffement ni trop lent, ni trop rapide. L'addition de noir de carbone ne permet pas, bien sûr, d'obtenir des caoutchoucs de couleur claire ou colorée, autres que noirs.

Les additions de charges claires dans les mélanges de caoutchoucs ont déjà été essayées : ainsi, le kaolin ou la craie n'ont pratiquement rien apporté à la vitesse de vulcanisation des élastomères apolaires ; des charges à base de silice provoquent un bon échauffement ; cependant, l'augmentation de la vitesse de l'échauffement des élastomères, par addition de silice, n'est probablement pas suffisante pour être appliquée industriellement. D'autres additifs de vulcanisation ont été proposés, tels que les glycols ou les amines (triéthanolamine). Ces techniques sont cependant coûteuses et grèvent donc particulièrement le prix de la vulcanisation.

Les techniques de vulcanisation, notamment en continu, par passage dans un tunnel à micro-ondes, sont décrites, pour la plupart des caoutchoucs courants, dans les publications suivantes :

- REVUE GENERALE DES CAOUTCHOUCS ET DES PLASTIQUES
  volume 46, n° 9, 1969 : "Le comportement d'élastomères et de mélanges dans un champ électrique hyperfréquence", par C. OETTNER ;

- REVUE GENERALE DES CAOUTCHOUCS ET DES PLASTIQUES
  volume 49, n° 4, 1972 : "Mélanges pour vulcanisation en continu en champ d'ultra-haute fréquence", par Jakob IPPEN.

Ces deux articles présentent un certain nombre de mélanges envisageables pour la vulcanisation par les techniques mentionnées, et insistent sur la difficulté pour mettre en oeuvre la vulcanisation en continu d'élastomères, ou de mélanges d'élastomères contenant des charges claires.

Un certain nombre d'additifs de vulcanisation, permettant de conférer la polarité nécessaire aux mélanges de caoutchouc apolaires, présentent en outre les inconvénients suivants :

- influence néfaste sur les propriétés mécaniques des caoutchoucs tels que le butyl ou les EPDM, cette influence pouvant être attribuée à la différence entre les paramètres de solubilité des caoutchoucs bruts et des glycols ou des amines (additifs de vulcanisation) ;

- les quantités d'additifs à ajouter aux mélanges de caout-

- 4 -

0002154

choucs bruts sont relativement importantes (d'où un prix élevé).

La présente invention a pour but de proposer un procédé permettant une bonne vulcanisation d'élastomères ou de mélanges d'élastomères contenant des charges claires.

Elle a donc pour objet un procédé de vulcanisation d'élastomères ou de mélanges d'élastomères, habituellement apolaires, par passage dudit mélange dans un champ d'ultra-haute fréquence, ledit procédé consistant à incorporer au mélange à vulcaniser, en plus des constituants classiques des formules de caoutchoucs, un polyuréthane et au moins un plastifiant.

L'invention a également pour objet les mélanges d'élastomères destinés à la vulcanisation, c'est-à-dire comportant les deux additifs ci-dessus mentionnés, ainsi que les mélanges vulcanisés par le procédé décrit ci-dessus.

Selon l'invention, on incorpore donc, avant vulcanisation (lors du mélange des différents constituants du produit destiné à être vulcanisé), au moins un polyuréthane et au moins un plastifiant.

Le polyuréthane peut être à l'état solide (de préférence divisé) ou à l'état liquide. La Demanderesse a observé qu'il est préférable d'opérer avec un polyuréthane liquide, car on obtient ainsi un échauffement plus important lors de la vulcanisation, et la polarité conférée aux mélanges par l'addition des polyuréthanes liquides est plus importante que par l'addition de polyuréthanes solides. De plus, et contre toute attente, les propriétés mécaniques des pièces – telles que des profilés – obtenues après vulcanisation ne sont pas du tout altérées par la présence, dans le mélange à vulcaniser, de ces polyuréthanes à l'état liquide. Ceux-ci doivent être incorporés dans le caoutchouc brut à raison de 1 à 20 parties en poids pour 100 parties en poids de caoutchouc brut, de préférence de 2 à 10 parties en poids d'additif pour 100 parties en poids de caoutchouc brut. Les quantités de polyuréthane à incorporer, selon l'invention, dans les formules de caoutchouc brut apolaire sont, en général, moins importantes que celles des additifs connus jusqu'à présent.

Les plastifiants utilisables, selon la présente invention, sont du type ester, plus ou moins polymérisés ; le choix du plastifiant est critique, car il peut se produire, pendant ou après la vulcanisation UHF, une exsudation, en particulier si les paramètres de solubilité des différents produits mélangés sont très différents ; le phénomène d'exsudation est d'autant plus prononcé que la réticulation est forte, les macromolécules de caoutchouc formant alors un réseau de plus en plus serré qui expulse les molécules du plastifiant. Dans le cadre de la présente invention, on peut utiliser, comme plastifiants, les produits suivants : phosphate de tricrésyle, phosphate de trichloréthyle, sebaçate de 2-éthylhexyle, ester adipique phtalique, par exemple. Les quantités de plastifiants à incorporer aux mélanges à vulcaniser sont variables ; elles peuvent, en effet, aller de 5 à 50 parties en poids pour 100 parties en poids de caoutchouc brut, de préférence 15 à 30 parties en poids de plastifiants pour 100 parties en poids de caoutchouc brut.

Le procédé selon l'invention permet d'obtenir des articles en caoutchouc dont :

- la vulcanisation est rapide et permet d'atteindre des cadences industrielles,

- les propriétés mécaniques sont très bonnes (résistance au fluage, rémanence à la compression, allongement à la rupture, bonne résistance au vieillissement pour les formules à base d'EPDM, bonne dureté, etc...),

- l'aspect extérieur est très bon ; en particulier, il est possible de pigmenter ces caoutchoucs, de façon à obtenir des articles colorés, pouvant être utilisés dans de multiples domaines, tels que les chemins de fer, l'automobile, les bâtiments, les appareils électro-ménagers, etc...

Les caoutchoucs ainsi vulcanisables peuvent par exemple être choisis dans le groupe : caoutchouc butyl, EPDM, caoutchoucs naturels, caoutchoucs styrène-butadiène ou butadiène, polynorbornènes, polyisoprènes.

Les exemples qui suivent illustrent l'invention sans vouloir la limiter ; l'homme de l'Art reconnaîtra aisément les constituants habituels des mélanges caoutchouteux à vulcaniser, à côté des polyuréthanes et des plastifiants esters. Il est bien entendu que l'invention ne se borne pas à des mélanges de caoutchouc brut qui comporteraient uniquement les constituants en question, mais que l'addition de polyuréthane et de plastifiants s'applique dans tous les cas de caoutchouc à vulcaniser.

## EXEMPLE 1

On réalise dans cet exemple plusieurs mélanges à vulcaniser ; on fait varier d'un mélange à l'autre la nature ou le pourcentage des différents constituants susceptibles de modifier les résultats de la vulcanisation (nature de l'élastomère, pourcentage du mélange réalisé en kaolin, silice, plastifiant classique, plastifiant ester, polyuréthane).

A) Pour chacun des mélanges on effectue les tests suivants :
- mesure de T90 selon la norme NFT 43015.
- mesure du temps de grillage (TG), selon la norme NFT 43004.
- mesure de la température finale de l'échantillon après séjour dans un four à micro-ondes pendant 60 secondes, la température initiale étant de 100°C (Tf UHF).
Les résultats de ces essais sont indiqués dans le Tableau I.

## - TABLEAU I -

| ES-SAI N° | COMPOSITION DU MELANGE - PARTIES EN POIDS | | | | | | | | | | | | T 90 (sec.) | TG (sec.) | Tf UHF °C |
|---|---|---|---|---|---|---|---|---|---|---|---|---|---|---|---|
| | EPDM A | EPDM B | SILICE | KAOLIN | PLAXENE 6110 | L 100 | IGN | ZnO | ACIDE STEARIQUE | CALOXOL | SOUFRE | VULCAFOR 2 | | | |
| 1 | 0 | 100 | 40 | 40 | 10 | 10 | 15 | 10 | 2 | 5 | 2 | 10 | 225 | 140 | 153 |
| 2 | 0 | 100 | 80 | 80 | 10 | 2,5 | 15 | 10 | 2 | 5 | 2 | 10 | 170 | 170 | 155 |
| 3 | 100 | 0 | 80 | 40 | 10 | 2,5 | 15 | 10 | 2 | 5 | 2 | 10 | 105 | 120 | 155 |
| 4 | 0 | 100 | 80 | 40 | 40 | 10 | 15 | 10 | 2 | 5 | 2 | 10 | 240 | 120 | 156 |
| 5 | 0 | 100 | 40 | 40 | 10 | 2,5 | 30 | 10 | 2 | 5 | 2 | 10 | 180 | 170 | 159 |
| 6 | 0 | 100 | 80 | 80 | 10 | 10 | 30 | 10 | 2 | 5 | 2 | 10 | 120 | 130 | 179 |
| 7 | 80 | 20 | 80 | 40 | 25 | 6 | 20 | 10 | 2 | 5 | 2 | 10 | 225 | 143 | 168-175 |

- 8 -

0002154

<u>Remarques</u> :

- la silice est une charge minérale renforçante,
- le kaolin, à base d'argile calciné, est une charge semi-renforçante,
- le Plaxène 6110 et l'IGN (phosphate de trichloréthyle) sont des appellations commerciales désignant des additifs facilitant la mise en oeuvre du mélange et, de plus, ajustent la dureté,
- l'oxyde de zinc et l'acide stéarique sont des activateurs des accélérateurs de vulcanisation,
- le soufre est un agent de vulcanisation,
- le VULCAFOR 2 (marque déposée) est un accélérateur de vulcanisation,
- le Caloxol (marque déposée) est constitué de chaux vive,
- le L 100 est un polyuréthane liquide de densité 1,05, de point éclair 249°C et de viscosité 18 000 centipoises à 30°C.

Tous ces produits peuvent bien entendu être substitués par des produits de fonction équivalente.

Les EPDM ayant servi à faire ces mélanges sont les suivants :

|  | EPDM A | EPDM B |
|---|---|---|
| % Insaturé | 3,5 | 9 |
| Taux $C_2H_4$ | 55 | 55 à 70 |
| Viscosité Mooney | 28 | 50 |
| Poids spécifique | 0,86 | 0,86 |

B) La Demanderesse a également réalisé des tests permettant d'évaluer les propriétés mécaniques de mélanges selon l'invention.

On trouvera, dans le Tableau II, les principaux résultats de ces tests, ainsi que la composition des mélanges testés.

- TABLEAU II -

| Composition \ Essai | 7* | 8 | 9 |
|---|---|---|---|
| EPDM A | 80 | 100 | 0 |
| EPDM B | 20 | 0 | 100 |
| Silice | 80 | 80 | 40 |
| Kaolin | 40 | 40 | 40 |
| Plaxène 6110 | 25 | 10 | 20 |
| L 100 | 6 | 10 | 2,5 |
| IGN | 20 | 30 | 30 |
| ZnO | 10 | 10 | 10 |
| Acide Stéarique | 2 | 2 | 2 |
| Caloxol | 5 | 5 | 5 |
| Vulcafor 2 | 10 | 10 | 10 |
| Soufre | 2 | 2 | 2 |

PROPRIETES :

du vulcanisat à 180°C (norme NFT 46 002)

| | 7* | 8 | 9 |
|---|---|---|---|
| Résistance à la rupture (MPa) | 5,3 | 3,6 | 6,3 |
| Allongement à la rupture (%) | 880 | 1030 | 960 |
| Module 100 % (MPa) | 2,3 | 2,3 | 0,8 |
| Dureté (D.I) | 78 | 80 | 52 |

du produit vieilli 7 jours à 100°C (norme NFT 46 004)

| | 7* | 8 | 9 |
|---|---|---|---|
| Résistance à la rupture (MPa) | 8,2 | 6,5 | 7,5 |
| Allongement à la rupture (%) | 360 | 340 | 470 |
| Module 100 % (MPa) | 5,0 | 4,6 | 3,0 |
| Dureté (D.I) | 90 | 88 | 75 |

* Composition identique à celle de l'Essai 7 du Tableau I.

On constate que les propriétés mécaniques sont bonnes, et que les mélanges selon l'invention conviennent particulièrement bien aux applications envisagées.

## EXEMPLE 2

La Demanderesse a réalisé la vulcanisation d'un mélange à base de caoutchouc butyl "N 34", dont les principales caractéristiques sont les suivantes :

- % molaire d'insaturation : environ 2 %,
- viscosité Mooney :         41 à 49 .

Le mélange a la formule suivante (parties en poids) :

- caoutchouc N 34 :          100
- oxyde de zinc :            10
- acide stéarique :          2
- L 100 :                    5
- Soufre :                   2
- Vulcafor 2 :               10
- Caloxol :                  5
- Silice :                   60.

Les propriétés suivantes ont été déterminées :

- temps de grillage :        270 s,
- T 90 :                     180 s,
- Tf UHF :                   160°C.

0002154

Revendications de brevet

1. Procédé de vulcanisation d'élastomères ou de mélanges d'élastomères normalement apolaires, par passage desdits élastomères dans un champ d'ultra-haute fréquence, ledit procédé comprenant, préalablement audit passage, l'incorporation dans le mélange à vulcaniser, en plus des constituants classiques des caoutchoucs, d'au moins un polyuréthane et un plastifiant.

2. Procédé selon la revendication 1, caractérisé en ce que le polyuréthane est à l'état liquide.

3. Procédé selon l'une des revendications 1 ou 2, caractérisé en ce que le polyuréthane est incorporé dans le mélange à vulcaniser dans la proportion de 1 partie à 20 parties en poids pour 100 parties d'élastomère et, de préférence, de 2 parties à 10 parties en poids.

4. Procédé selon l'une des revendications 1 à 3, caractérisé en ce que ledit plastifiant est choisi dans le groupe de plastifiants de type ester plus ou moins polymérisé.

5. Procédé selon l'une des revendications 1 à 4, caractérisé en ce que le plastifiant est incorporé dans le mélange à vulcaniser dans la proportion de 5 parties à 50 parties en poids et, de préférence, de 15 parties à 30 parties, pour 100 parties d'élastomère.

6. Procédé selon l'une des revendications 1 à 5, caractérisé en ce que l'élastomère est choisi dans le groupe constitué par le caoutchouc butyl, les EPDM, le caoutchouc naturel, les caoutchoucs butadiène ou styrène butadiène, les polynorbornènes, les polyisoprènes.

7. Procédé selon l'une des revendications 1 à 6, caractérisé en ce que lesdits élastomères contiennent des

0002154

charges claires.

8. A titre de produits industriels nouveaux, les mélanges caoutchouteux destinés à la vulcanisation et comprenant, outre les additifs classiques, au moins un polyuréthane et un plastifiant de type ester.

9. A titre de produits industriels nouveaux, les mélanges caoutchouteux obtenus par un procédé conforme à l'une des revendications 1 à 7.

10. Application des mélanges selon la revendication 9, à la réalisation de profilés utiles dans l'industrie du bâtiment, de l'électroménager, de l'automobile, des chemins de fer.

Office européen
des brevets

**RAPPORT DE RECHERCHE EUROPEENNE**

0002154

Numéro de la demande

EP 78 40 0176

| Catégorie | DOCUMENTS CONSIDERES COMME PERTINENTS | | CLASSEMENT DE LA DEMANDE (Int. Cl.²) |
|---|---|---|---|
| | Citation du document avec indication, en cas de besoin, des parties pertinentes | Revendication concernée | |
| A | US - A - 3 514 499 (C.S. SCHOLLEN-BERGER et al.) <br><br> * Colonne 1, lignes 35-40 * <br><br> ------ | | C 08 J 3/28 <br> C 08 L 21/00// <br> (C 08 L 21/00 <br> 75/04) |

**DOMAINES TECHNIQUES RECHERCHES (Int. Cl.²)**

C 08 J   3/28
C 08 L   7/00
        9/00
        9/06
        21/00
B 29 H   5/26

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 12-02-1979 | VAN HUMBEECK |

OEB Form 1503.1   06.78